# EUROPEAN PATENT APPLICATION

(11) **EP 3 524 409 A1**
(43) Date of publication of application: **14.08.2019**
(21) Application number: 18156130.9
(22) Date of filing: 09.02.2018
(51) Int. Cl.: B29C 64/277, B33Y 30/00, B29C 64/268, B29C 64/135, B29C 64/153, B22F 3/105

(54) **APPARATUS FOR ADDITIVELY MANUFACTURING THREE-DIMENSIONAL OBJECTS**

(71) Applicant: CL Schutzrechtsverwaltungs GmbH, 96215 Lichtenfels (DE)
(72) Inventor: Dr. Pontiller-Schymura, Peter, 95512 Neudrossenfeld (DE); Dr. Eichenberg, Boris, 96215 Lichtenfels (DE); Schödel, Frank, 96317 Kronach (DE)
(74) Representative: Hafner & Kohl

(57) **Abstract**

Apparatus (1) for additively manufacturing three-dimensional objects (2) by means of successive layerwise selective irradiation and consolidation of layers of a build material (3) which can be consolidated by means of an energy source, wherein an irradiation device (4) with at least one irradiation unit (5) is provided that comprises a common holding structure (6), in particular a common housing, holding at least two irradiation elements (7) in a defined spatial relation, wherein the at least two irradiation elements (7) are individually controllable.

## Description

The invention relates to an apparatus for additively manufacturing three-dimensional objects by means of successive layerwise selective irradiation and consolidation of layers of a build material which can be consolidated by means of an energy beam.

Apparatuses for additively manufacturing of three-dimensional objects, for example via selective irradiation and consolidation of layers with an energy beam, for example an energy beam, such as a laser beam, are generally known from prior art. Typically, irradiation units are provided, such as laser sources, that are adapted to generate a corresponding energy beam. The energy beam is guided onto the build material which can be arranged in a build plane.

Further, it is known from prior art that various parameters of the energy beam directly influence the consolidation behavior of the build material in the irradiation process. For example, the energy that is depleted in a defined volume of build material influences the consolidation behavior, for example the degree to which the build material is melted, i.e. consolidated. Of course, various parameters of the energy beam have to be taken into calculation, such as the energy / intensity of the energy beam, the spot size of the energy beam and the like. It is also possible to vary the irradiation time, i.e. the time the spot of the energy beam is incident on a specific region of the build plane, to vary the energy that is depleted in the build material.

As different structures of different objects require different amounts of energy to be depleted in different regions of the build plane, it is also desired to have the possibility to change the energy that can be depleted in the build material, for example via a variation of the intensity or the irradiation time, as described before. It is also possible to increase the power of the energy beam, for example to reduce the irradiation time required to properly consolidate the build material. However, irradiation units adapted to generate energy beams with higher powers are costly and are demanding in terms of maintenance and operation, as comparatively higher demands are laid down for the infrastructure provided for these irradiation units, such as cooling units, energy sources and the like.

It is an object of the present invention to provide an apparatus for additively manufacturing of three-dimensional objects with an improved irradiation device, in particular with which a consolidation process can be performed more efficiently.

The object is inventively achieved by an apparatus according to claim 1. Advantageous embodiments of the invention are subject to the dependent claims.

The apparatus described herein is an apparatus for additively manufacturing three-dimensional objects, e.g. technical components, by means of successive selective layerwise consolidation of layers of a powdered build material ("build material") which can be consolidated by means of an energy beam, e.g. an energy beam, in particular a laser beam or an electron beam. A respective build material can be a metal, ceramic or polymer powder. A respective energy beam can be a laser beam or an electron beam. A respective apparatus can be an apparatus in which an application of build material and a consolidation of build material is performed separately, such as a selective laser sintering apparatus, a selective laser melting apparatus or a selective electron beam melting apparatus, for instance.

The apparatus may comprise a number of functional units which are used during its operation. Exemplary functional units are a process chamber, an irradiation device, as described before, which is adapted to selectively irradiate a build material layer disposed in the process chamber with at least one energy beam, and a stream generating device which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

The invention is based on the idea that an irradiation device with at least one irradiation unit is provided that comprises a common holding structure, in particular a common housing, holding at least two irradiation elements in a defined spatial relation, wherein the at least two irradiation elements are individually controllable. Thus, the irradiation unit of the irradiation device comprises at least two irradiation elements via which an energy beam can be generated and/or emitted or output, respectively. The at least two irradiation elements are individually controllable which allows for irradiating build material with different parameters, for example different energies or intensities.

Hence, the energy beams of the at least two irradiation elements can arbitrarily be combined, as each irradiation element is individually controllable. For example, the irradiation elements may individually be switched on and off to allow for composing a common energy beam spot on the build plane which is composed of the energy beam spots of different energy beams generated via the different irradiation elements. In other words, at least two energy beam spots of at least two energy beams generated via different irradiation elements can be combined / overlaid in the build plane. Thus, if less energy is required to irradiate build material, the at least two irradiation elements can be controlled in that the required energy can be provided. For example, if only one energy beam is sufficient to provide the required energy, only one irradiation element may be used to generate the energy beam.

Compared to a single irradiation element that provides an energy beam with a power sufficient to perform all irradiation tasks that may be present throughout an additive manufacturing process, the inventive irradiation unit with the at least two individually controllable irradiation elements provides the benefit of only using the entire available energy beam power, if it is required and control the irradiation elements correspondingly, if only a smaller amount of energy is required to properly irradiate the build material.

To keep the at least two irradiation elements in a defined spatial relation, the inventive irradiation unit comprises a common holding structure, such as a common housing, which holds / houses the at least two irradiation elements in a defined spatial relation. Hence, the irradiation unit comprising the at least two irradiation elements forms an assembly, as the irradiation elements are arranged in the common holding structure or on the common holding structure, respectively.

According to a first embodiment of the inventive apparatus, at least one beam guiding unit may be provided that is adapted to individually guide at least two energy beams generated via the at least two irradiation elements in a build plane. Hence, the spots of the energy beams that are individually generated via the at least two irradiation elements can be guided separately/individually in the build plane. Thus, two sections of the build plane can simultaneously be irradiated with the two (or more) energy beams. For example, if the energy provided with each of the energy beams is sufficient to consolidate the build material, the irradiation time can be reduced, as different sections of the build plane can simultaneously be irradiated with the at least two energy beams and therefore, the structures that need to be irradiated in the build plane can be irradiated simultaneously and faster compared with the use of only one single higher powered energy beam. Of course, the use of only two energy beams is merely exemplary, wherein an arbitrary number of energy beams and irradiation elements generating the energy beams can be used instead.

Further, the beam guiding unit may be adapted to guide the at least two energy beams in that the spots of the at least two energy beams are separate or at least partially overlap in the build plane. Therefore, the energy beams can arbitrarily be combined in the build plane. For example, if a section of the build plane requires to be irradiated with an energy beam with a defined parameter, for example a defined beam power, at least two energy beams can be guided in the build plane in that the spots of the at least two energy beams at least partially overlap. In particular, the at least two (e.g. a plurality of) energy beams can be guided synchronously, wherein the individual energy beams are combined or overlap, respectively. Thus, a single energy beam with a higher power compared to the individual energy beams generated via the at least two energy beams, which is usually used in additive manufacturing, can be substituted by combining the at least two energy beams.

Hence, the at least two energy beams can be combined, if needed and can be separately guided in the build plane otherwise. Of course, an arbitrary number of energy beams generated by corresponding irradiation elements can be combined. For example, if five irradiation elements are available providing/generating five energy beams, it is possible to combine three of those energy beams and two of the remaining energy beams may be combined or may be guided separately. Of course, the combination described before is only exemplary, wherein an arbitrary combination/individual guidance of the single energy beams in the build plane is feasible. Further, any of the energy beams can be individually switched off or on, as well.

According to another embodiment of the inventive apparatus, the beam guiding unit may be adapted to guide each energy beam over a defined region of the build plane, wherein the at least two energy beams may be overlapped in an overlapping region, in particular in the entire build plane. Thus, it is possible to define a region in which each of the energy beams may be guided in the build plane, wherein at least one overlapping region may be defined, in which the energy beams can be guided in that spots generated in the build plane can be at least partially overlapped. Thus, the build plane may be subdivided into regions, wherein each region may be assigned to at least one of the energy beams, wherein each energy beam can be guided in the sub-region it is assigned to. The sub-regions overlap in the overlapping region, wherein the energy beams can be guided in that the spots in the build plane overlap in the overlapping region. Preferably, the overlapping region may be the entire build plane in that all energy beams can be overlapped in any region of the build plane. Of course, it is also possible to have every energy beam guided in every region of the build plane.

The inventive apparatus may further be improved in that the irradiation unit comprises a common energy source, in particular an electrical energy source, that is adapted to provide the at least two irradiation elements with energy for generating an energy beam. Thus, the at least two irradiation elements can be provided with energy via the common energy source. The common energy source may for example be attached to or integrated into the common holding structure, i.e. arranged inside the common housing. The common energy source may distribute the energy to the at least two irradiation elements providing the irradiation elements with power in that the at least two irradiation elements may generate the corresponding energy beams. Hence, compared to a single irradiation element or multiple irradiation elements that are arranged separately, as usually used in prior art, only one common energy source is required, wherein the provided energy may be distributed to the at least two irradiation elements as required.

Further, the common energy source may be adapted to individually provide energy to each irradiation element, wherein a control unit may be adapted to individually dim and/or switch each irradiation element. The control unit may, for example, be considered as part of the common energy source or can be provided as a separate control unit, which also may be attached to or integrated in the common holding structure. The control unit may be adapted to distribute the (electrical) energy provided via the common energy source and, in particular, individually dim and/or switch each irradiation element. Advantageously, the at least two irradiation elements can be switched and/or dimmed in that the energy of the energy beams generated via the at least two irradiation elements can be controlled. Thus, the proper amount of energy can be depleted in the build material.

According to another embodiment of the inventive apparatus, the irradiation unit may comprise a common cooling device, wherein the at least two irradiation elements are arranged in thermal contact to the common cooling device. Thus, the irradiation elements can be tempered, in particular cooled, via the common cooling device, wherein the at least two irradiation elements are arranged in thermal contact with the common cooling device. In other words, instead of providing individual cooling devices for each irradiation element, one common cooling device can be provided that is adapted cool the at least two irradiation elements, in particular all irradiation elements, assigned to the same irradiation unit. The cooling device may, for example, be integrated in or attached to the common holding structure.

Preferably, the common cooling device may comprise at least one common cooling circuit and/or at least one common cooling platform. In general, the common cooling device may be used to dissipate heat from the irradiation elements, in particular to cool the irradiation elements throughout the additive manufacturing process. Thus, heat may be guided away from the at least two irradiation elements via at least one cooling circuit. The cooling circuit may comprise at least one fluid that can guide heat away from the irradiation elements, for example by flowing along at least one surface of the at least two irradiation elements. Alternatively or additionally at least one common cooling platform may be provided to which the irradiation elements are attached, i.e. with which the irradiation elements stay in (direct) thermal contact.

According to another preferred embodiment of the inventive apparatus, the at least two irradiation elements and the common energy source and/or the common cooling device form an irradiation assembly. Thus, the at least two irradiation elements and the common energy source and/or the common cooling device may be coupled together via the common holding structure, in particular may be arranged in the same common housing. Thus, the irradiation unit and the supplementary devices, i.e. the common energy source and the common cooling device, form the irradiation assembly and can be arranged in the same common housing. Thus, as the irradiation assembly provides one component (assembly) of the additive manufacturing apparatus, the irradiation assembly can built be compact and simple to mount.

Further, the irradiation device may comprise at least one optical fiber, wherein at least two energy beams, in particular generated by different irradiation elements, are coupled into the same optical fiber or into different optical fibers. Thus, it is possible to guide the energy beam generated by one of the irradiation elements with a corresponding optical fiber, i.e. into the process chamber and to the build plane. It is also possible to have at least two irradiation elements that generate energy beams that are coupled into the same optical fiber to combine both energy beams.

The inventive apparatus may further be improved in that at least one irradiation head may be provided that is coupleable or coupled with the at least two irradiation elements, wherein the at least one irradiation head comprises at least one beam modifying unit adapted to, in particular individually, modify the beam properties of each of the energy beams generated via the irradiation elements. Thus, the irradiation head may be used to modify the beam properties of each of the energy beams individually or the irradiation head may modify at least two energy beams uniformly and/or simultaneously. Hence, the beam properties, e.g. spot dimensions (shape, size, etc.), spot focus positions, spot position relative to a reference axis, of each of the energy beams coupled into the irradiation head may be modified.

Besides, the invention relates to an irradiation device for an apparatus for additively manufacturing three-dimensional objects, in particular an inventive apparatus, as described before, wherein the irradiation device comprises at least one irradiation unit that comprises a common holding structure, in particular a common housing, on which at least two irradiation elements are arranged in a defined spatial relation, wherein the at least two irradiation elements are individually controllable.

Further, the invention relates to a method for operating at least one apparatus for additively manufacturing three-dimensional objects by means of successive layerwise selective irradiation and consolidation of layers of a build material which can be consolidated by means of an energy beam, in particular an inventive apparatus, as described before, wherein the apparatus comprises at least one irradiation device with at least one irradiation unit that comprises a common holding structure, in particular a common housing, on which at least two irradiation elements are arranged in a defined spatial relation, wherein the at least two irradiation elements are individually controllable or controlled.

Self-evidently, all features, details and advantages described with respect to the inventive apparatus are fully transferable to the inventive irradiation device and the inventive method. In particular, the inventive method may be performed on the inventive apparatus, preferably using an inventive irradiation device.

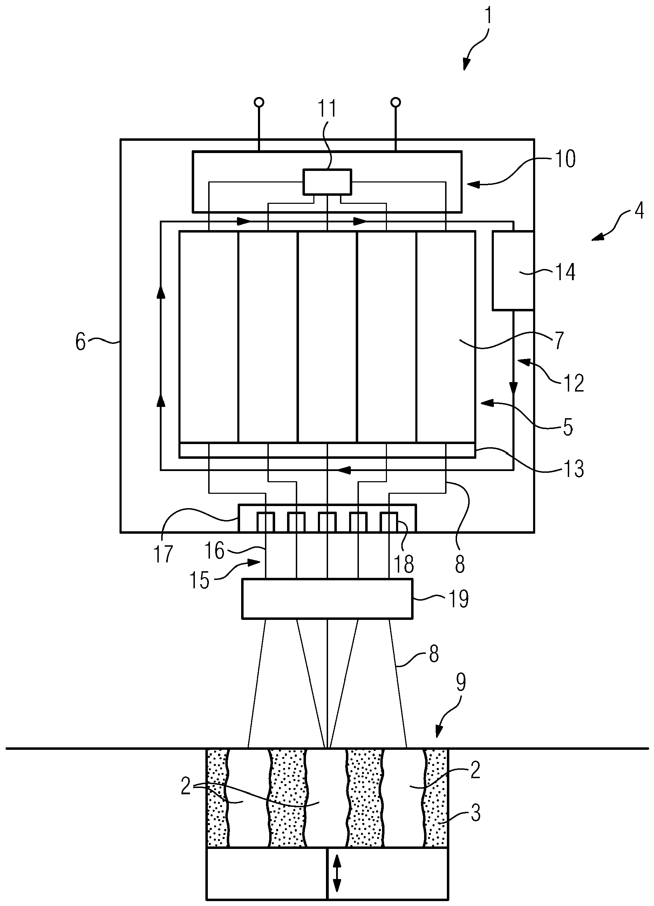

Exemplary embodiments of the invention are described with reference to the Fig. The sole Fig. is a schematic diagram showing an inventive apparatus.

The sole Fig. shows an apparatus 1 for additively manufacturing three-dimensional objects 2 by means of successive layerwise selective irradiation and consolidation of layers of a build material 3 which can be consolidated by means of an energy beam 8. The apparatus 1 comprises an irradiation device 4 with an irradiation unit 5 that comprises a common holding structure 6 which is built as common housing in this exemplary embodiment. The irradiation unit 5 further comprises multiple irradiation elements 7, wherein in this exemplary embodiment five irradiation elements 7 are provided.

As can be derived from the Fig., the irradiation elements 7 are arranged in the common holding structure 6, wherein in other words, the common holding structure 6 encloses, inter alia, the irradiation elements 7. Thus, the common holding structure 6 defines a spatial relation and holds the irradiation elements 7 in this defined spatial relation, as the irradiation elements 7 are attached to the common holding structure 6 and attached to one another (optional).

Each of the irradiation elements 7 is adapted to generate an energy beam 8 which can be guided onto a build plane 9 of the apparatus 1 to selectively irradiate build material 3 arranged in the build plane 9 to additively build the object 2 in a layerwise successive manner. The irradiation elements 7 are provided with (electrical) energy via a common energy source 10. The common energy source 10 is also integrated into the common holding structure 6 (optional). The common energy source 10 comprises a control unit 11 that is adapted to individually provide (electrical) energy to each irradiation element 7. Thus, the control unit 11 is adapted to individually switch each irradiation element 7 on or off, wherein the control unit 11 according to this exemplary embodiment is additionally adapted to individually dim each of the irradiation elements 7.

The energy beams 8 generated via the individual irradiation elements 7 can be guided via a beam guiding unit 19 onto the build plane 9. The beam guiding unit 19 is adapted to guide the energy beams 8 individually, wherein at least two of the energy beams 8 can at least partially be overlapped. Thus, the spots of the energy beams 8 in the build plane 9 can at least partially be overlapped, in particular fully overlapped, to combine at least two energy beams 8. Of course, arbitrary combinations of the energy beams 8 in the build plane 9 are feasible, wherein in the exemplary embodiment that is depicted in the sole Fig., three energy beams 8 are combined and two energy beams 8 are individually controlled and separately guided in the build plane 9. Of course, the guidance of the energy beams 8 in the build plane 9 and the performed combinations of single energy beams 8 depend on the actual irradiation step. By combining at least two energy beams, different beam parameters can be enhanced, such as the energy that is depleted with the combined energy beams 8 can be increased.

The beam guiding unit 19 may therefore, guide each energy beam 8 over a defined region of the build plane 9, in particular the entire build plane 9. According to this embodiment depicted in the sole Fig., the energy beams 8 can arbitrarily be overlapped or combined over the entire build plane 9.

The irradiation unit 5 further comprises a common cooling device 12 that comprises a common cooling platform 13 and a common cooling circuit 14. As can be derived from the sole Fig., the irradiation elements 7 are attached to the common cooling platform 13 and therefore, stay in thermal contact with the common cooling platform 13. Further, the common cooling circuit 14 is adapted to generate a flow of a cooling fluid, such as inert gas, streaming alongside the irradiation elements 7, the common energy source 10 and the cooling platform 13. Thus, the irradiation element 7 can be tempered, preferably cooled, inside the common holding structure 6, wherein the common cooling platform 13 and the common cooling circuit 14, i.e. the common cooling device 12, is also arranged inside the common holding structure 6. The common cooling device 12 allows for dissipating heat from the irradiation elements 7 to ensure that the irradiation elements 7 keep a constant temperature throughout the additive manufacturing process.

The irradiation unit 5 further comprises a fiber array 15, wherein the fiber array 15 comprises multiple (five) optical fibers 16, wherein the energy beams 8 generated via the irradiation elements 7 are coupled into the optical fibers 15 of the fiber array 15. It is particularly possible, that the energy beams 8 may be coupled into the same optical fiber 16 or are coupled into different optical fibers 16. According to the depicted embodiment, every energy beam 8 is coupled into an individual optical fiber 16 of the optical fiber array 15. The optical fibers 16 allow for transferring the energy beams 8 from the irradiation elements 7 to the beam guiding unit 19, for instance.

Further, the irradiation device 4 comprises an irradiation head 17 that is coupled with the irradiation elements 7. The irradiation head 17 comprises modifying units 18 that are adapted to individually modify the beam properties of each of the energy beams 8 that are generated via the irradiation elements 7. Thus, different beam properties of the generated energy beams 8 can be modified individually, for example the spot dimensions, in particular a spot shape, a spot size and/or a spot focus position relative to the build plane 9 and/or a spot position relative to a reference axis, e.g. a central axis of the build plane 9.

The irradiation elements 7 and the common energy source 10 and the common cooling device 12 and the irradiation head 17 form and irradiation assembly in this exemplary embodiment. Thus, the irradiation assembly comprises different components that are all arranged in a common holding structure 6, in particular a common housing.

Self-evidently, the inventive method may be performed on the inventive apparatus 1, preferably using the irradiation device 4.

## Claims

1. Apparatus (1) for additively manufacturing three-dimensional objects (2) by means of successive layerwise selective irradiation and consolidation of layers of a build material (3) which can be consolidated by means of an energy beam, **characterized by** an irradiation device (4) with at least one irradiation unit (5) that comprises a common holding structure (6), in particular a common housing, holding at least two irradiation elements (7) in a defined spatial relation, wherein the at least two irradiation elements (7) are individually controllable.

2. Apparatus according to claim 1, **characterized by** at least one beam guiding unit (19) adapted to individually guide at least two energy beams (8) generated via the at least two irradiation elements (7) in a build plane (9).

3. Apparatus according to one of the preceding claims, **characterized in that** the beam guiding unit (19) is adapted to guide the at least two energy beams (8) **in that** the spots of the at least two energy beams (8) are separate or at least partially overlap in the build plane (9).

4. Apparatus according to one of the preceding claims, **characterized in that** the beam guiding unit (19) is adapted to guide each energy beam (8) over a defined region of the build plane (9), wherein the at least two energy beams (8) may be overlapped in an overlapping region, in particular in the entire build plane (9).

5. Apparatus according to one of the preceding claims, **characterized in that** the irradiation unit (5) comprises a common energy source (10), in particular an electrical energy source, that is adapted to provide the at least two irradiation elements (7) with energy for generating an energy beam (8).

6. Apparatus according to one of the preceding claims, **characterized in that** the common energy source (10) is adapted to individually provide energy to each irradiation element (7), wherein a control unit (11) is adapted to individually dim and/or switch each irradiation element (7).

7. Apparatus according to one of the preceding claims, **characterized in that** the irradiation unit (5) comprises a common cooling device (12), wherein the at least two irradiation elements (7) are arranged in thermal contact to the common cooling device (12).

8. Apparatus according to one of the preceding claims, **characterized in that** the common cooling device (12) comprises at least one common cooling circuit (14) and/or at least one common cooling platform (13).

9. Apparatus according to one of the preceding claims, **characterized in that** the at least two irradiation elements (7) and the common energy source (10) and/or the common cooling device (12) form an irradiation assembly.

10. Apparatus according to one of the preceding claims, **characterized in that** the irradiation device (4) comprises at least one optical fiber (16), wherein at least two energy beams (8) are coupled into the same optical fiber (16) or into different optical fibers (16).

11. Apparatus according to one of the preceding claims, **characterized in that** the irradiation unit (5) comprises an optical fiber array (15) with at least two optical fibers (16), wherein at least two energy beams (8) generated via at least two irradiation elements (7) are coupled into the same optical fiber (16) and/or at least two energy beams (8) are coupled into different optical fibers (16) of the optical fiber array (15).

12. Apparatus according to one of the preceding claims, **characterized by** at least one irradiation head (17) couplable or coupled with the at least two irradiation elements (7), wherein the at least one irradiation head (17) comprises at least one beam modifying unit (18) adapted to individually modify the beam properties of each of the energy beams (8) generated via the irradiation elements (7).

13. Apparatus according to one of the preceding claims, **characterized in that** the beam modifying unit (18) is adapted to, in particular individually, modify the spot dimensions, in particular spot shape, spot size, and/or the spot focus position relative to a build plane (9) and/or the spot position relative to a reference axis, of each of the energy beams (8).

14. Irradiation device (4) for an apparatus (1) for additively manufacturing three-dimensional objects (2), in particular an apparatus (1) according to one of the preceding claims, **characterized in that** the irradiation device (4) comprises at least one irradiation unit (5) that comprises a common holding structure (6), in particular a common housing, holding at least two irradiation elements (7) in a defined spatial relation, wherein the at least two irradiation elements (7) are individually controllable.

15. Method for operating at least one apparatus (1) for additively manufacturing three-dimensional objects (2) by means of successive layerwise selective irradiation and consolidation of layers of a build material (3) which can be consolidated by means of an energy beam, **characterized in that** the apparatus (1) comprises at least one irradiation device (4) with at least one irradiation unit (5) that comprises a common holding structure (6), in particular a common housing, holding at least two irradiation elements (7) in a defined spatial relation, wherein the at least two irradiation elements (7) are individually controllable or controlled.
